(19) Europäisches Patentamt
European Patent Office
Office européen des brevets

(11) EP 4 653 474 A1

(12) EUROPEAN PATENT APPLICATION
published in accordance with Art. 153(4) EPC

(43) Date of publication:
**26.11.2025 Bulletin 2025/48**

(21) Application number: **23917913.8**

(22) Date of filing: **20.12.2023**

(51) International Patent Classification (IPC):
***C08F 10/00*** (2006.01) ***C08F 4/6592*** (2006.01)
***C08F 4/659*** (2006.01) ***C08F 4/02*** (2006.01)

(52) Cooperative Patent Classification (CPC):
**C08F 4/02; C08F 4/659; C08F 4/6592; C08F 10/00**

(86) International application number:
**PCT/KR2023/021150**

(87) International publication number:
**WO 2024/154961 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.01.2023 KR 20230008669**

(71) Applicant: **Hanwha Solutions Corporation**
**Jung-gu**
**Seoul 04541 (KR)**

(72) Inventors:
- **LEE, Munhee**
  **Seoul 04541 (KR)**
- **KIM, Sung Dong**
  **Seoul 04541 (KR)**
- **SEO, Junho**
  **Seoul 04541 (KR)**
- **PARK, Hye Ran**
  **Seoul 04541 (KR)**
- **JOUNG, Ui Gab**
  **Seoul 04541 (KR)**
- **JO, Jisong**
  **Seoul 04541 (KR)**
- **PARK, Jeong Hyun**
  **Seoul 04541 (KR)**
- **KIM, Ji Ho**
  **Seoul 04541 (KR)**
- **LIM, Seong Jae**
  **Seoul 04541 (KR)**

(74) Representative: **Berggren Oy**
**P.O. Box 16**
**Fabianinkatu 21**
**00101 Helsinki (FI)**

# (54) OLEFIN-BASED POLYMER AND PREPARATION METHOD THEREFOR

(57) The present invention relates to an olefin-based polymer and, more specifically, to an olefin-based polymer and a preparation method therefor, the olefin-based polymer enabling excellent processability and mechanical strength to be simultaneously exhibited.

EP 4 653 474 A1

## Description

## TECHNICAL FIELD

The present invention relates to an olefin-based polymer, and more specifically to an olefin-based polymer which can simultaneously exhibit the effects of excellent processability, low density and excellent mechanical strength, and a preparation method therefor.

## BACKGROUND ART

Metallocene catalysts, which are one of the catalysts used to polymerize olefins, are compounds in which ligands such as cyclopentadienyl, indenyl and cycloheptadienyl are coordinated to transition metals or transition metal halogen compounds, and have a basic sandwich structure.

While Ziegler-Natta catalysts, which are another catalyst used to polymerize olefins, have metal components that are active sites dispersed on an inert solid surface such that the properties of the active sites are not uniform, metallocene catalysts are known as single-site catalysts because they are a single compound with a fixed structure such that all active sites have the same polymerization characteristics. Polymers polymerized with these metallocene catalysts have a narrow molecular weight distribution, a uniform distribution of comonomers and higher copolymerization activity than Ziegler-Natta catalysts.

Linear low-density polyethylene (LLDPE) is prepared by copolymerizing ethylene and alpha-olefin at low pressure using a polymerization catalyst. It has a narrow molecular weight distribution, short chain branches (SCB) of constant length, and generally does not have long chain branches (LCB). Films manufactured with linear low-density polyethylene have the characteristics of general polyethylene as well as high breaking strength and elongation, and excellent tear strength and impact strength, and thus, they are widely used in stretch films and overlap films where conventional low-density polyethylene or high-density polyethylene is difficult to apply.

Meanwhile, attempts have been made to polymerize olefin-based polymers using a single metallocene catalyst in the past, but the conventionally polymerized olefin-based polymers had problems with poor processability and mechanical strength.

Accordingly, there is an urgent need to develop an olefin-based polymer that has low density while ensuring excellent processability and mechanical strength.

## DISCLOSURE

## TECHNICAL PROBLEM

The present invention has been devised to overcome the above-described problems, and an object of the present invention is to provide an olefin-based polymer which can simultaneously exhibit the effects of excellent processability, low density and excellent mechanical strength, and a preparation method therefor.

## TECHNICAL SOLUTION

In order to solve the above-described problems, the present invention provides a method for preparing an olefin-based polymer, the method including preparing an olefin-based polymer by polymerizing an olefin-based monomer at a predetermined ethylene partial pressure under a catalyst, wherein the method satisfies Condition (1) below:

$$(1)\ 23.490 \leq \frac{MFR}{0.63} - Pc_2 \leq 24.762$$

wherein in Condition (1) above, the $Pc_2$ is the ethylene partial pressure (bar), and MFR represents $\frac{Melt\ flow\ index\ (I_{21.6}, g/10\ min)\ measured\ under\ a\ load\ of\ 21.6\ kg\ at\ 190°C}{Melt\ flow\ index\ (I_{2.16}, g/10\ min)\ measured\ under\ a\ load\ of\ 2.16\ kg\ at\ 190°C}$ of the olefin-based polymer.

According to an embodiment of the present invention, the olefin-based polymer may have a melt flow index of 0.5 to 1.5 g/10 min as measured under a load of 2.16 kg at 190°C according to ASTM D1238, and a melt flow index of 20 to 30 g/10 min as measured under a load of 21.6 kg at 190°C.

In addition, the ethylene partial pressure may be 9.5 to 16.5 bar.

In addition, the catalyst may include a hybrid catalyst including a different first compound and second compound represented Chemical Formula 1 below:

[Chemical Formula 1]

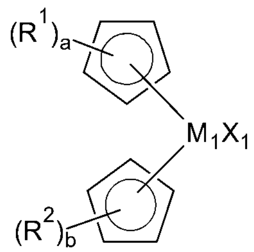

wherein in Chemical Formula 1 above,

$M_1$ may be titanium (Ti), zirconium (Zr) or hafnium (Hf),
wherein $X_1$ may be a halogen, a substituted or unsubstituted $C_1$ to $C_5$ alkyl group, a substituted or unsubstituted $C_2$ to $C_5$ alkenyl group, a substituted or unsubstituted $C_1$ to $C_5$ alkynyl group, a substituted or unsubstituted $C_1$ to $C_5$ alkoxy group, a substituted or unsubstituted $C_6$ to $C_{20}$ aryloxy group, a substituted or unsubstituted $C_6$ to $C_{20}$ aryl group, or a substituted or unsubstituted $C_2$ to $C_{20}$ heteroaryl group,
wherein $R_1$ and $R_2$ may be each independently hydrogen, deuterium, a substituted or unsubstituted $C_1$ to $C_5$ alkyl group, a substituted or unsubstituted $C_2$ to $C_5$ alkenyl group, a substituted or unsubstituted $C_1$ to $C_5$ alkynyl group, a substituted or unsubstituted $C_1$ to $C_5$ alkoxy group, a substituted or unsubstituted $C_6$ to $C_{20}$ aryloxy group, a substituted or unsubstituted $C_6$ to $C_{20}$ aryl group, or a substituted or unsubstituted $C_2$ to $C_{20}$ heteroaryl group, and
wherein a and b may be each independently an integer from 1 to 5.

In addition, the catalyst may further include a cocatalyst compound including at least any one of a compound represented by Chemical Formula 2 below, a compound represented by Chemical Formula 3 below and a compound represented by Chemical Formula 4 below:

[Chemical Formula 2]

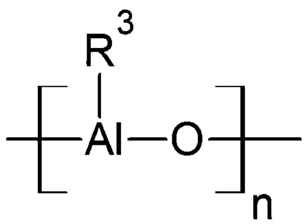

[Chemical Formula 3]

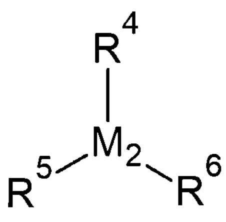

[Chemical Formula 4] $[L\text{-}H]^+[Z(A)_4]^-$ or $[L]^+[Z(A)_4]^-$

wherein in Chemical Formula 2 above, $R_3$ may be a halogen atom, or a $C_1$ to $C_{20}$ hydrocarbon group substituted or unsubstituted with a halogen, and n may be an integer of 2 or more,

wherein in Chemical Formula 3 above, $M_2$ may be aluminum (Al) or boron (B), and $R^4$, $R^5$ and $R^6$ may be each independently a halogen atom, a $C_1$ to $C_{20}$ hydrocarbon group substituted or unsubstituted with a halogen, or a $C_1$ to $C_{20}$ alkoxy group substituted or unsubstituted with a halogen, and

wherein in Chemical Formula 4 above, L may be a neutral or cationic Lewis base, $[L\text{-}H]^+$ and $[L]^+$ may be Bronsted acids, Z may be a Group 13 element, and A may be each independently a substituted or unsubstituted $C_6$ to $C_{20}$ aryl group, or a substituted or unsubstituted $C_1$ to $C_{20}$ alkyl group.

In addition, the catalyst may further include a carrier supporting at least any one of the hybrid catalyst and cocatalyst compound and including at least any one of silica, alumina and magnesia.

In addition, the present invention provides an olefin-based polymer that satisfies Condition (1) below:

$$(1)\ 23.490 \le \frac{MFR}{0.63} - Pc_2 \le 24.762$$

wherein in Condition (1) above, the $Pc_2$ is the ethylene partial pressure (bar), and MFR represents $\frac{Melt\ flow\ index\ (I_{21.6}, g/10\ min)\ measured\ under\ a\ load\ of\ 21.6\ kg\ at\ 190°C}{Melt\ flow\ index\ (I_{2.16}, g/10\ min)\ measured\ under\ a\ load\ of\ 2.16\ kg\ at\ 190°C}$ of the olefin-based polymer.

According to an embodiment of the present invention, the olefin-based polymer may have a melt flow index of 0.5 to 1.5 g/10 min as measured under a load of 2.16 kg at 190°C according to ASTM D1238, and a melt flow index of 20 to 30 g/10 min as measured under a load of 21.6 kg at 190°C.

In addition, the olefin-based polymer may further satisfy Condition (2) below:

$$(2)\ 1.785 \le \frac{Drop\ impact\ strength\ (g)}{42} - P_{C_2} \le 2.977$$

wherein in Condition (2) above, the $Pc_2$ is the ethylene partial pressure (bar), and the drop impact strength represents a drop impact strength measured according to ASTM D1709.

In addition, the ethylene partial pressure may be 9.5 to 16.5 bar.

In addition, the olefin-based polymer may have a density of 0.915 to 0.935 kg/$m^3$ and a drop impact strength of 520 g or more.

## ADVANTAGEOUS EFFECTS

The olefin-based polymer according to the present invention and the preparation method therefor can simultaneously exhibit the effects of excellent processability, low density and excellent mechanical strength.

## BEST MODE

Hereinafter, embodiments of the present invention will be described in detail so that those skilled in the art can easily practice the present invention. The present invention may be implemented in various different forms and is not limited to the embodiments described herein.

As described above, in the case of conventional olefin-based polymers and the preparation methods therefor, there were problems in that processability and mechanical strength were poor due to the use of a metallocene single catalyst.

Accordingly, the present invention seeks to solve the above-described problems by providing a method for preparing an olefin-based polymer, including preparing an olefin-based polymer by polymerizing an olefin-based monomer under a catalyst at a predetermined ethylene partial pressure.

Through this, the present invention can simultaneously exhibit the effects of excellent processability, low density and excellent mechanical strength.

Meanwhile, the method for preparing an olefin-based polymer according to the present invention satisfies

Condition (1) below.

As Condition (1), $23.49 \leq \frac{MFR}{0.63} - Pc_2 \leq 24.762$, and preferably, $23.65 \leq \frac{MFR}{0.63} - Pc_2 \leq 24.604$.

In this case, in Condition (1) above, the Pc2 is the ethylene partial pressure (bar), and MFR represents $\frac{Melt\ flow\ index\ (I_{21.6}, g/10\ min)\ measured\ under\ a\ load\ of\ 21.6\ kg\ at\ 190°C}{Melt\ flow\ index\ (I_{2.16}, g/10\ min)\ measured\ under\ a\ load\ of\ 2.16\ kg\ at\ 190°C}$ of the olefin-based polymer.

If $\frac{MFR}{0.63} - Pc_2$ is less than 23.49 in Condition (1) above, the mechanical strength may be low, and if $\frac{MFR}{0.63} - Pc_2$ is more than 24.762, the processability may not be good, and even if the processability is good, the mechanical strength may be reduced and/or the density may increase.

Meanwhile, the step of preparing an olefin-based polymer by polymerizing an olefin-based monomer at a predetermined ethylene partial pressure under the catalyst may include preparing a catalyst and preparing an olefin-based polymer at a predetermined ethylene partial pressure.

First of all, the step of preparing a catalyst will be described.

According to an embodiment of the present invention, the catalyst may include a hybrid catalyst, and preferably, it may include a hybrid catalyst including a different first compound and second compound represented by Chemical Formula 1 below.

[Chemical Formula 1]

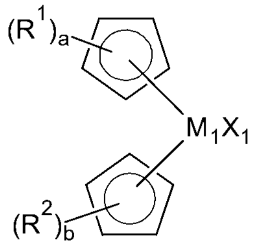

In Chemical Formula 1,

$M_1$ is titanium (Ti), zirconium (Zr) or hafnium (Hf),

$X_1$ is a halogen, a substituted or unsubstituted $C_1$ to $C_5$ alkyl group, a substituted or unsubstituted $C_2$ to $C_5$ alkenyl group, a substituted or unsubstituted $C_1$ to $C_5$ alkynyl group, a substituted or unsubstituted $C_1$ to $C_5$ alkoxy group, a substituted or unsubstituted $C_6$ to $C_{20}$ aryloxy group, a substituted or unsubstituted $C_6$ to $C_{20}$ aryl group, or a substituted or unsubstituted $C_2$ to $C_{20}$ heteroaryl group,

$R_1$ and $R_2$ are each independently hydrogen, deuterium, a substituted or unsubstituted $C_1$ to $C_5$ alkyl group, a substituted or unsubstituted $C_2$ to $C_5$ alkenyl group, a substituted or unsubstituted $C_1$ to $C_5$ alkynyl group, a substituted or unsubstituted $C_1$ to $C_5$ alkoxy group, a substituted or unsubstituted $C_6$ to $C_{20}$ aryloxy group, a substituted or unsubstituted $C_6$ to $C_{20}$ aryl group, or a substituted or unsubstituted $C_2$ to $C_{20}$ heteroaryl group, and

a and b are each independently an integer from 1 to 5.

Preferably, in Chemical Formula 1 above,

$M_1$ may be zirconium (Zr) or hafnium (Hf),

$X_1$ may be a halogen, a substituted or unsubstituted $C_1$ to $C_5$ alkyl group, a substituted or unsubstituted $C_2$ to $C_5$

alkenyl group, a substituted or unsubstituted $C_1$ to $C_5$ alkynyl group, or a substituted or unsubstituted $C_1$ to $C_5$ alkoxy group, and

$R^1$ and $R^2$ may each independently be hydrogen, a substituted or unsubstituted $C_1$ to $C_5$ alkyl group, a substituted or unsubstituted $C_2$ to $C_5$ alkenyl group, a substituted or unsubstituted $C_1$ to $C_5$ alkynyl group, or a substituted or unsubstituted $C_1$ to $C_5$ alkoxy group.

Meanwhile, the first compound may preferably be a compound represented by Chemical Formula 1-1 below, and the second compound may preferably be a compound represented by Chemical Formula 1-2 below.

[Chemical Formula 1-1]

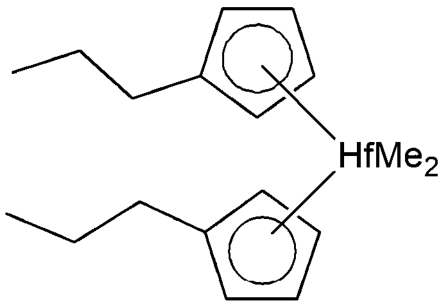

[Chemical Formula 1-2]

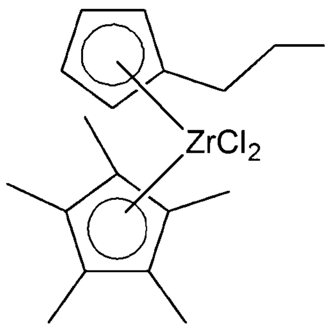

By satisfying Condition (1) described above and including the hybrid catalyst, it may be advantageous in achieving the object of the present invention, and by satisfying Condition (1) described above and including the first compound and the second compound, it may be more advantageous in achieving the object of the present invention, and by satisfying Condition (1) described above and including the first compound represented by Chemical Formula 1-1 above and the second compound represented by Compound 1-2 above, it may be more advantageous in achieving the object of the present invention.

Meanwhile, when the catalyst is a hybrid catalyst including the first compound and the second compound, the hybrid catalyst may include the first compound and the second compound in a weight ratio of 1:0.1 to 0.8, and preferably, the first compound and the second compound in a weight ratio of 1:0.12 to 0.7. When the weight ratio of the first compound and the second compound satisfies the above range, it may be more advantageous in achieving the object of the present invention.

According to an embodiment of the present invention, the catalyst may further include a cocatalyst compound, and preferably, the cocatalyst compound may include at least any one of a compound represented by Chemical Formula 2 below, a compound represented by Chemical Formula 3 below and a compound represented by Chemical Formula 4 below.

[Chemical Formula 2]

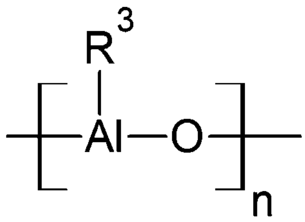

[Chemical Formula 3]

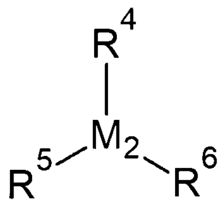

[Chemical Formula 4] $[L\text{-}H]^+[Z(A)_4]^-$ or $[L]^+[Z(A)_4]^-$

In Chemical Formula 2 above, $R_3$ is a halogen atom, or a $C_1$ to $C_{20}$ hydrocarbon group substituted or unsubstituted with a halogen, and n is an integer of 2 or more,

in Chemical Formula 3 above, $M_2$ is aluminum (Al) or boron (B), and $R^4$, $R^5$ and $R^6$ are each independently a halogen atom, a $C_1$ to $C_{20}$ hydrocarbon group substituted or unsubstituted with a halogen, or a $C_1$ to $C_{20}$ alkoxy group substituted or unsubstituted with a halogen, and

in Chemical Formula 4 above, L is a neutral or cationic Lewis base, $[L\text{-}H]^+$ and $[L]^+$ are Bronsted acids, Z is a Group 13 element, and A is each independently a substituted or unsubstituted $C_6$ to $C_{20}$ aryl group, or a substituted or unsubstituted $C_1$ to $C_{20}$ alkyl group.

Meanwhile, more preferably, the cocatalyst compound may include aluminoxane, and more preferably, the aluminoxane may be methyl aluminoxane (MAO), and thus, it may be more advantageous in achieving the object of the present invention.

In addition, according to an embodiment of the present invention, the catalyst may further include a carrier supporting at least any one of the hybrid catalyst and the cocatalyst compound, and preferably, a carrier supporting the hybrid catalyst and the cocatalyst compound.

For the carrier, any known carrier may be used without limitation as long as it is a carrier that can support the above-described hybrid catalyst and the cocatalyst compound, but preferably, it may be more advantageous in achieving the object of the present invention to include at least any one of silica, alumina and magnesia, and more preferably, silica.

As described above, when the catalyst includes the above-described carrier, the above-described hybrid catalyst supported on the carrier and the above-described cocatalyst compound, the step of preparing a catalyst may include forming a mixed catalyst by mixing a hybrid catalyst and a cocatalyst compound; supporting the hybrid catalyst and the cocatalyst compound on the carrier by mixing the mixed catalyst, the carrier and the solvent; and drying the carrier supporting the hybrid catalyst and the cocatalyst compound.

The mixed catalyst may be formed by mixing the hybrid catalyst and the cocatalyst compound, and the cocatalyst compound may be mixed in a cocatalyst solution at a concentration of 5 to 15%. The mixing of the hybrid catalyst and the cocatalyst compound may be performed by mixing the hybrid catalyst and the cocatalyst solution in a weight ratio of 1:130 to 180, and preferably, the hybrid catalyst and the cocatalyst solution in a weight ratio of 1:140 to 170. As the weight ratio of the hybrid catalyst and the cocatalyst solution is satisfied, it may be more advantageous in achieving the object of the present invention. In this case, the solvent of the cocatalyst solution may be the same as or different from the solvent used in the supporting step described below, but is not limited thereto.

In addition, the step of supporting may mix the mixed catalyst (including the solvent of the cocatalyst solution) and the carrier in a weight ratio of 1:0.1 to 0.35, and preferably, the mixed catalyst and the carrier in a weight ratio of 1:0.12 to 0.32, and the solvent may be mixed in an amount of 150 to 350 parts by weight, and preferably, 200 to 300 parts by weight, based on 100 parts by weight of the carrier. As the weight ratio and solvent content range of the mixed catalyst and the

carrier are satisfied, it may be more advantageous in achieving the object of the present invention. In this case, the solvent may be used without limitation as long as it is a solvent that can be commonly used in the art, and preferably, it may include toluene, but is not limited thereto.

Meanwhile, the step of supporting may be performed at a temperature of 55 to 85°C for 1 to 3 hours, and preferably, at a temperature of 60 to 80°C for 1.5 to 2.5 hours, but is not limited thereto.

In addition, the step of drying the carrier supporting the hybrid catalyst and cocatalyst compound may be performed under vacuum conditions at a temperature of 45 to 75°C for 8 to 14 hours, and preferably, at a temperature of 50 to 70°C for 9 to 13 hours, but is not limited thereto.

Next, the step of preparing an olefin-based polymer at a predetermined ethylene partial pressure is described.

The step of preparing an olefin-based polymer is performed by polymerizing an olefin-based monomer at a predetermined ethylene partial pressure, and the ethylene partial pressure may be 9.5 to 16.5 bar, and preferably 9.8 to 16.2 bar, so as to satisfy Condition (1) above. If the ethylene partial pressure is less than 9.5 bar, the mechanical strength may be reduced, and if the ethylene partial pressure is more than 16.5 bar, the processability may be reduced, and even if the processability is good, the mechanical strength may be reduced and/or the density may increase.

In addition, the olefin-based monomer may be at least one selected from the group consisting of $C_2$ to $C_{20}$ alpha-olefin, $C_1$ to $C_{20}$ diolefin, $C_3$ to $C_{20}$ cycloolefin and $C_3$ to $C_{20}$ cyclodiolefin, and preferably, it may be at least any one of ethylene, propylene, 1-butene, 1-pentene, 4-methyl-1-pentene, 1-hexene, 1-heptene, 1-octene, 1-decene, 1-undecene, 1-dodecene, 1-tetradecene or 1-hexadecene.

Meanwhile, the olefin-based polymer prepared through the above-described preparation method may have a melt flow index of 0.5 to 1.5 g/10 min as measured under a load of 2.16 kg at 190°C according to ASTM D1238, and a melt flow index of 20 to 30 g/10 min as measured under a load of 21.6 kg at 190°C in order to satisfy Condition (1) above, and preferably, the melt flow index as measured under a load of 2.16 kg at 190°C according to ASTM D1238 may be 0.6 to 1.4 g/10 min, and the melt flow index as measured under a load of 21.6 kg at 190°C may be 20.5 to 29 g/10 min. According to the above ASTM D1238, as the melt flow index measured under a load of 2.16 kg at 190°C and the melt flow index measured under a load of 21.kg at 190°C are satisfied, the olefin-based polymer may simultaneously exhibit the effects of low density, excellent processability and excellent mechanical strength.

The method for preparing an olefin-based polymer according to the present invention has been described above, but this is only an example, and additional processes and conditions may be further included.

In addition, the present invention provides an olefin-based polymer satisfying Condition (1) below.

As condition (1), $23.49 \leq \frac{MFR}{0.63} - Pc_2 \leq 24.762$, and preferably, $23.65 \leq \frac{MFR}{0.63} - Pc_2 \leq 24.604$.

In this case, in Condition (1) above, the Pc2 is the ethylene partial pressure (bar), and MFR represents $\frac{Melt\ flow\ index\ (I_{21.6}, g/10\ min)\ measured\ under\ a\ load\ of\ 21.6\ kg\ at\ 190°C}{Melt\ flow\ index\ (I_{2.16}, g/10\ min)\ measured\ under\ a\ load\ of\ 2.16\ kg\ at\ 190°C}$ of the olefin-based polymer.

The description of Condition (1) and the factors related thereto, such as ethylene partial pressure and melt flow index, are omitted as they are the same as the descriptions in the above-described method for preparing an olefin-based polymer.

Meanwhile, the olefin-based polymer according to the present invention may further satisfy Condition (2) below.

As Condition (2), $1.785 \leq \frac{Drop\ impact\ strength\ (g)}{42} - P_{C_2} \leq 2.977$, and preferably, $1.809 \leq \frac{Drop\ impact\ strength\ (g)}{42} - P_{C_2} \leq 2.858$.

In this case, the drop impact strength in Condition (2) above represents a drop impact strength measured according to ASTM D1709.

If, in Condition (2) above, $\frac{Drop\ impact\ strength\ (g)}{42} - P_{C_2}$ is less than 1.785, the mechanical strength of the olefin-based polymer may not be good, and if $\frac{Drop\ impact\ strength\ (g)}{42} - P_{C_2}$ is more than 2.977, the processability of the olefin-based polymer may not be good, and even if the processability is good, the mechanical strength may decrease and/or the density may increase.

Meanwhile, the olefin-based polymer according to the present invention may have a density of 0.915 to 0.935 $kg/m^2$, and preferably, the olefin-based polymer may have a density of 0.916 to 0.933 $kg/m^2$. If the density of the olefin-based polymer is less than 0.915 $kg/m^2$, the mechanical properties of the olefin-based polymer may not be good, and if the density is more than 0.935 $kg/m^2$, the processability may not be good.

In addition, the olefin-based polymer according to the present invention may have a drop impact strength of 520 g or more, and preferably, 540 g or more. Accordingly, it is possible to achieve an effect with excellent strength despite low density.

**MODES OF THE INVENTION**

Hereinafter, the present invention will be described in more detail through examples, but the following examples do not limit the scope of the present invention, and should be interpreted as helping to understand the present invention

**<Preparation Example: Preparation of hybrid catalyst>**

A first compound represented by Chemical Formula 1-1 below and a second compound represented by Chemical Formula 1-2 below were purchased from MCN Material Technologies (Shanghai), and a hybrid catalyst was prepared without a separate additional purification process. In this case, 8.1 kg of the first compound represented by Chemical Formula 1-1 below and 3.4 kg of the compound represented by Chemical Formula 1-2 below were prepared.

[Chemical Formula 1-1]

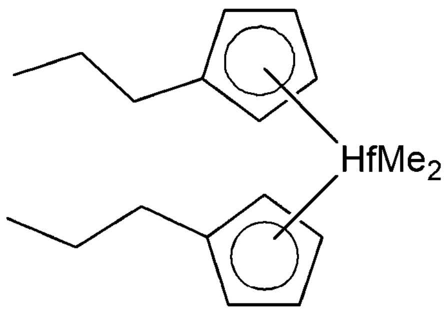

[Chemical Formula 1-2]

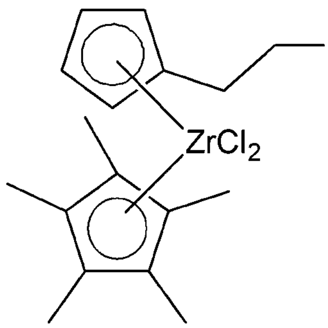

**<Example: Preparation of catalyst>**

The entire amount of the hybrid catalyst prepared according to the above preparation example and 1,800 kg of a cocatalyst solution including toluene as a solvent and methylaluminoxane as a cocatalyst compound at a concentration of 10% were stirred at 25°C for 1 hour to prepare a mixed catalyst.

Then, the prepared mixed catalyst and 400 kg of silica (XPO-2402) as a carrier were introduced, 1,000 L of toluene was additionally added as a solvent, stirred at 70°C for 2 hours, washed 3 times with 100 L of toluene, and dried under vacuum at 60°C for 12 hours to obtain 560 kg of a catalyst.

**<Preparation Examples 1 to 4 and Comparative Preparation Examples 1 to 2: Preparation of olefin-based polymers>**

An ethylene/1-hexene polymerization reaction was performed by using a continuous gas phase polymerization reactor consisting of a fluidized bed. As shown in Tables 1 and 2 below, the hydrogen and 1-hexene input amounts were adjusted, and the ethylene partial pressure was adjusted to prepare olefin-based polymers as shown in Tables 1 and 2.

**<Comparative Preparation Examples 3 and 4>**

Linear low-density polyethylene polymers (M1810HN, Hanwha Solutions) sold by Hanwha Solutions were prepared, except that each olefin-based polymer was prepared by changing the conditions as shown in Table 2 below.

**<Experimental Example>**

The following physical properties were evaluated for the olefin-based polymers prepared according to the above preparation examples and comparative preparation examples, and the results are shown in Tables 1 and 2.

**1. Measurement of melt flow index**

For each olefin-based polymer prepared according to the preparation examples and comparative preparation examples, the melt flow index ($I_{21.6}$) was measured under a load of 21.6 kg (a weight of 21.6 kg) at 190°C in accordance with ASTM D 1238, and the melt flow index ($I_{2.16}$) was measured under a load of 2.16 kg (a weight of 2.16 kg) at 190°C, and then, the melt flow index ratio (MFR, processability) was measured by calculating $I_{21.6}$ / $I_{2.16}$.

**2. Measurement of density**

For each olefin-based polymer prepared according to the preparation examples and comparative preparation examples, the density was measured in accordance with ASTM D1505.

**3. Measurement of drop impact strength**

For each olefin-based polymer prepared according to the preparation examples and comparative preparation examples, the drop impact strength was measured in accordance with ASTM D1709.

[Table 1]

| Classification | Preparation Example 1 | Preparation Example 2 | Preparation Example 3 | Preparation Example 4 |
|---|---|---|---|---|
| Type of Catalyst | Example | Example | Example | Example |
| Polymerization Temperature | 88.7 | 88.6 | 88.2 | 88.8 |
| Amount of Catalyst Injection (kg/h) | 2.2 | 2.0 | 2.2 | 2.1 |
| Amount of Hydrogen Injection (kg/h) | 0.51 | 0.50 | 0.54 | 0.47 |
| Amount of 1-Hexene Injection (ton/h) | 1.21 | 1.18 | 1.15 | 1.11 |
| Concentration Ratio of Hydrogen/Ethylene (%) | 0.053 | 0.046 | 0.057 | 0.054 |
| Concentration Ratio of 1-Hexene Fthvlene (%) | 2.1 | 1.9 | 1.5 | 2.0 |
| Amount of Polymer Production Per Hour (MT/h) | 16.1 | 15.4 | 15.8 | 15.9 |
| Ethylene Partial Pressure ($Pc_2$, bar) | 10.4 | 13.9 | 14.8 | 10.1 |
| Melt Flow Index ($I_{21.6}$, g/10min) | 22.0 | 24.4 | 26.0 | 21.4 |
| Melt Flow Index ($I_{2.16}$, g/10min) | 1.01 | 1.02 | 1.06 | 1.01 |
| Ratio of Melt Flow Indexes (MFR, $I_{21.6}/I_{2.16}$) | 21.8 | 23.9 | 24.5 | 21.2 |
| Condition 1, (MFR/0.63)-$Pc_2$ | 24.175 | 24.071 | 24.134 | 23.532 |
| Density (kg/cm$^3$) | 0.9198 | 0.9200 | 0.9204 | 0.9197 |

(continued)

| Classification | Preparation Example 1 | Preparation Example 2 | Preparation Example 3 | Preparation Example 4 |
|---|---|---|---|---|
| Drop Impact Strength (g) | 550 | 660 | 720 | 500 |
| Condition 2, (Drop Impact Strength/42)-$PC_2$ | 2.695 | 1.814 | 2.343 | 1.805 |

[Table 2]

| Classification | Comparati ve Preparation Example 1 | Comparati ve Preparation Example 2 | Comparati ve Preparation Example 3 | Comparati ve Preparation Example 4 |
|---|---|---|---|---|
| Type of Catalyst | Example | Example | - | - |
| Polymerization Temperature | 89.1 | 74.8 | 85 | 85.3 |
| Amount of Catalyst Injection (kg/h) | 2.2 | 1.97 | 2.6 | 2.8 |
| Amount of Hydrogen Injection (kg/h) | 0.46 | 2.28 | 0.29 | 0.31 |
| Amount of 1-Hexene Injection (ton/h) | 1.14 | 1.53 | 1.11 | 1.10 |
| Concentration Ratio of Hydrogen/Ethylene (%) | 0.054 | 0.045 | 0.025 | 0.023 |
| Concentration Ratio of 1-Hexene Ethylene (%) | 2.2 | 1.45 | 2.5 | 2.7 |
| Amount of Polymer Production Per Hour (MT/h) | 15.7 | 15.75 | 15.5 | 15.8 |
| Ethylene Partial Pressure ($Pc_2$, bar) | 9.3 | 14.71 | 12.9 | 15.9 |
| Melt Flow Index ($I_{21.6}$, g/10min) | 20.6 | 27.8 | 16.1 | 15.9 |
| Melt Flow Index ($I_{2.16}$, g/10min) | 1 | 1.11 | 1.01 | 1.04 |
| Ratio of Melt Flow Indexes (MFR, $I_{21.6}/I_{2.16}$) | 20.6 | 25.0 | 15.9 | 15.4 |
| Condition 1, (MFR/0.63)-$Pc_2$ | 23.40 | 25.044 | 12.403 | 8.367 |
| Density (kg/cm$^3$) | 0.9130 | 0.9372 | 0.9199 | 0.9197 |
| Drop Impact Strength (g) | 465 | 760 | 400 | 420 |
| Condition 2, (Drop Impact Strength/42)-Pc2 | 1.771 | 3.385 | -3.376 | -5.900 |

As can be confirmed from Table 1 and Table 2 above, it can be seen that Preparation Examples 1 to 4, which satisfied all of the preparation conditions and physical properties (ethylene partial pressure, melt flow index ratio, etc.) of the olefin-based polymer of the present invention, simultaneously exhibited significantly superior effects in processability and mechanical properties compared to Comparative Preparation Examples 1 to 4, which did not satisfy even one of the above.

Meanwhile, Comparative Preparation Example 2 had a level of strength and mechanical strength that was not poor, but this was due to the significantly high density, and it can be seen that it did not meet the object of the present invention, which aims excellent processability, low density and high strength.

Although one embodiment of the present invention has been described above, the spirit of the present invention is not limited to the embodiments presented in the present specification, and those skilled in the art who understand the idea of the present invention will be able to easily propose other embodiments by modifying, changing, deleting or adding components within the scope of the same idea, but this will also be considered to fall within the scope of the idea of the present invention.

**Claims**

**1.** A method for preparing an olefin-based polymer, the method comprising:

preparing an olefin-based polymer by polymerizing an olefin-based monomer at a predetermined ethylene partial pressure under a catalyst,
wherein the method satisfies Condition (1) below:

$$(1)\ 23.490 \leq \frac{MFR}{0.63} - Pc_2 \leq 24.762$$

wherein in Condition (1) above, the $Pc_2$ is the ethylene partial pressure (bar), and MFR represents $\frac{Melt\ flow\ index\ (I_{21.6}, g/10\ min)\ measured\ under\ a\ load\ of\ 21.6\ kg\ at\ 190°C}{Melt\ flow\ index\ (I_{2.16}, g/10\ min)\ measured\ under\ a\ load\ of\ 2.16\ kg\ at\ 190°C}$ of the olefin-based polymer.

**2.** The method of claim 1, wherein the olefin-based polymer has a melt flow index of 0.5 to 1.5 g/10 min as measured under a load of 2.16 kg at 190°C according to ASTM D1238, and a melt flow index of 20 to 30 g/10 min as measured under a load of 21.6 kg at 190°C.

**3.** The method of claim 1, wherein the ethylene partial pressure is 9.5 to 16.5 bar.

**4.** The method of claim 1, wherein the catalyst comprises a hybrid catalyst comprising a different first compound and second compound represented Chemical Formula 1 below:

[Chemical Formula 1]

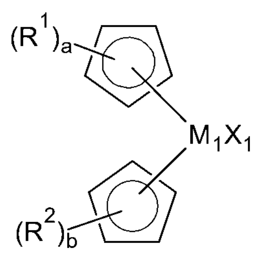

wherein in Chemical Formula 1 above, $M_1$ is titanium (Ti), zirconium (Zr) or hafnium (Hf),

wherein $X_1$ is a halogen, a substituted or unsubstituted $C_1$ to $C_5$ alkyl group, a substituted or unsubstituted $C_2$ to $C_5$ alkenyl group, a substituted or unsubstituted $C_1$ to $C_5$ alkynyl group, a substituted or unsubstituted $C_1$ to $C_5$ alkoxy group, a substituted or unsubstituted $C_6$ to $C_{20}$ aryloxy group, a substituted or unsubstituted $C_6$ to $C_{20}$ aryl group, or a substituted or unsubstituted $C_2$ to $C_{20}$ heteroaryl group,

wherein $R_1$ and $R_2$ are each independently hydrogen, deuterium, a substituted or unsubstituted $C_1$ to $C_5$ alkyl group, a substituted or unsubstituted $C_2$ to $C_5$ alkenyl group, a substituted or unsubstituted $C_1$ to $C_5$ alkynyl group, a substituted or unsubstituted $C_1$ to $C_5$ alkoxy group, a substituted or unsubstituted $C_6$ to $C_{20}$ aryloxy group, a substituted or unsubstituted $C_6$ to $C_{20}$ aryl group, or a substituted or unsubstituted $C_2$ to $C_{20}$ heteroaryl group, and

wherein a and b are each independently an integer from 1 to 5.

**5.** The method of claim 4, wherein the catalyst further comprises a cocatalyst compound comprising at least any one of a compound represented by Chemical Formula 2 below, a compound represented by Chemical Formula 3 below and a compound represented by Chemical Formula 4 below:

[Chemical Formula 2]

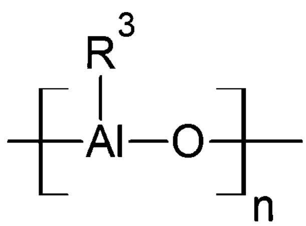

[Chemical Formula 3]

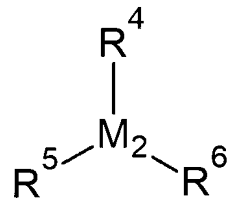

[Chemical Formula 4] $[L-H]^+[Z(A)_4]^-$ or $[L]^+[Z(A)_4]^-$

wherein in Chemical Formula 2 above, $R_3$ is a halogen atom, or a $C_1$ to $C_{20}$ hydrocarbon group substituted or unsubstituted with a halogen, and n is an integer of 2 or more,
wherein in Chemical Formula 3 above, $M_2$ is aluminum (Al) or boron (B), and $R^4$, $R^5$ and $R^6$ are each independently a halogen atom, a $C_1$ to $C_{20}$ hydrocarbon group substituted or unsubstituted with a halogen, or a $C_1$ to $C_{20}$ alkoxy group substituted or unsubstituted with a halogen, and
wherein in Chemical Formula 4 above, L is a neutral or cationic Lewis base, $[L-H]^+$ and $[L]^+$ are Bronsted acids, Z is a Group 13 element, and A is each independently a substituted or unsubstituted $C_6$ to $C_{20}$ aryl group, or a substituted or unsubstituted $C_1$ to $C_{20}$ alkyl group.

**6.** The method of claim 5, wherein the catalyst further comprises a carrier supporting at least any one of the hybrid catalyst and cocatalyst compound and comprising at least any one of silica, alumina and magnesia.

**7.** An olefin-based polymer that satisfies Condition (1) below:

$$(1)\ 23.490 \leq \frac{MFR}{0.63} - Pc_2 \leq 24.762$$

wherein in Condition (1) above, the $Pc_2$ is the ethylene partial pressure (bar), and MFR represents $\frac{Melt\ flow\ index\ (I_{21.6}, g/10\ min)\ measured\ under\ a\ load\ of\ 21.6\ kg\ at\ 190°C}{Melt\ flow\ index\ (I_{2.16}, g/10\ min)\ measured\ under\ a\ load\ of\ 2.16\ kg\ at\ 190°C}$ of the olefin-based polymer.

**8.** The olefin-based polymer of claim 7, wherein the olefin-based polymer has a melt flow index of 0.5 to 1.5 g/10 min as measured under a load of 2.16 kg at 190°C according to ASTM D1238, and a melt flow index of 20 to 30 g/10 min as measured under a load of 21.6 kg at 190°C.

**9.** The olefin-based polymer of claim 7, wherein the olefin-based polymer further satisfies Condition (2) below:

$$(2)\ 1.785 \leq \frac{Drop\ impact\ strength\ (g)}{42} - P_{C_2} \leq 2.977$$

wherein in Condition (2) above, the $Pc_2$ is the ethylene partial pressure (bar), and the drop impact strength represents a drop impact strength measured according to ASTM D1709.

**10.** The olefin-based polymer according to any one of claims 7 to 9, wherein the ethylene partial pressure is 9.5 to 16.5 bar.

**11.** The olefin-based polymer of claim 7, wherein the olefin-based polymer has a density of 0.915 to 0.935 kg/$m^3$ and a drop impact strength of 520 g or more.

**INTERNATIONAL SEARCH REPORT**

International application No.
**PCT/KR2023/021150**

**A. CLASSIFICATION OF SUBJECT MATTER**

**C08F 10/00**(2006.01)i; **C08F 4/6592**(2006.01)i; **C08F 4/659**(2006.01)i; **C08F 4/02**(2006.01)i

According to International Patent Classification (IPC) or to both national classification and IPC

**B. FIELDS SEARCHED**

Minimum documentation searched (classification system followed by classification symbols)

C08F 10/00(2006.01); C07F 17/00(2006.01); C08F 10/02(2006.01); C08F 2/06(2006.01); C08F 2/14(2006.01); C08F 210/02(2006.01); C08F 210/14(2006.01); C08F 210/16(2006.01); C08F 4/648(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 올레핀(olefin), 밀도(density), 용융지수(MI, melt-index), 혼성촉매(hybrid catalyst), 메탈로센(metallocene), 하프늄(hafnium, Hf), 지르코늄(zirconium, Zr), 분압(partial pressure)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0071992 A (HANWHA SOLUTIONS CORPORATION) 02 June 2022 (2022-06-02)<br>See claims 1-20; and paragraphs [0155], [0165], [0167] and [0182]. | 1-11 |
| X | KR 10-2016-0121540 A (UNIVATION TECHNOLOGIES, LLC) 19 October 2016 (2016-10-19)<br>See paragraphs [0060]-[0063], [0135], [0163]-[0165] and [0274]-[0281]. | 1,3,7,10 |
| X | KR 10-2022-0070734 A (HANWHA SOLUTIONS CORPORATION) 31 May 2022 (2022-05-31)<br>See claims 1-15; and paragraphs [0058], [0128], [0130] and [0132]. | 1-11 |
| A | US 2005-0159300 A1 (JENSEN, M. D. et al.) 21 July 2005 (2005-07-21)<br>See paragraphs [0377] and [0387]-[0388]; and claims 1-38. | 1-11 |
| A | KR 10-0310758 B1 (EXXONMOBIL OIL CORPORATION) 17 December 2001 (2001-12-17)<br>See paragraphs [0079]-[0115]. | 1-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 April 2024** | **01 April 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
PCT/KR2023/021150

C. DOCUMENTS CONSIDERED TO BE RELEVANT

| Category* | Citation of document, with indication, where appropriate, of the relevant passages | Relevant to claim No. |
|---|---|---|
| A | KR 10-2013-0113470 A (EXXONMOBIL CHEMICAL PATENTS INC.) 15 October 2013 (2013-10-15) See paragraphs [0361]-[0377]. | 1-11 |

Form PCT/ISA/210 (second sheet) (July 2022)

**INTERNATIONAL SEARCH REPORT**
**Information on patent family members**

International application No.
**PCT/KR2023/021150**

| Patent document cited in search report | Publication date (day/month/year) | Patent family member(s) | Publication date (day/month/year) |
|---|---|---|---|
| KR 10-2022-0071992 A | 02 June 2022 | CN 116457378 A | 18 July 2023 |
| | | EP 4249530 A1 | 27 September 2023 |
| | | JP 2023-550633 A | 04 December 2023 |
| | | KR 10-2611798 B1 | 12 December 2023 |
| | | US 2023-0416426 A1 | 28 December 2023 |
| | | WO 2022-108233 A1 | 27 May 2022 |
| KR 10-2016-0121540 A | 19 October 2016 | CN 105980423 A | 28 September 2016 |
| | | CN 105980423 B | 25 March 2022 |
| | | CN 105980424 A | 28 September 2016 |
| | | CN 105980424 B | 21 May 2019 |
| | | CN 105992775 A | 05 October 2016 |
| | | CN 105992775 B | 25 October 2019 |
| | | CN 105992776 A | 05 October 2016 |
| | | CN 105992776 B | 21 May 2019 |
| | | CN 106029710 A | 12 October 2016 |
| | | CN 106029710 B | 30 August 2019 |
| | | CN 106029711 A | 12 October 2016 |
| | | CN 106029711 B | 10 May 2019 |
| | | CN 106029712 A | 12 October 2016 |
| | | CN 106029712 B | 21 May 2019 |
| | | CN 106034402 A | 19 October 2016 |
| | | CN 106034402 B | 31 May 2019 |
| | | CN 106062016 A | 26 October 2016 |
| | | CN 106062016 B | 08 October 2019 |
| | | CN 109535299 A | 29 March 2019 |
| | | CN 109535299 B | 28 June 2022 |
| | | CN 110330581 A | 15 October 2019 |
| | | CN 110330581 B | 28 June 2022 |
| | | CN 110330582 A | 15 October 2019 |
| | | CN 110330582 B | 12 April 2022 |
| | | CN 110540612 A | 06 December 2019 |
| | | CN 110540612 B | 12 August 2022 |
| | | CN 114805656 A | 29 July 2022 |
| | | EP 3105257 A2 | 21 December 2016 |
| | | EP 3105257 B1 | 21 October 2020 |
| | | EP 3105258 A1 | 21 December 2016 |
| | | EP 3105259 A2 | 21 December 2016 |
| | | EP 3105259 B1 | 11 November 2020 |
| | | EP 3105261 A1 | 21 December 2016 |
| | | EP 3105261 B1 | 12 October 2022 |
| | | EP 3105262 A1 | 21 December 2016 |
| | | EP 3105262 B1 | 30 March 2022 |
| | | EP 3105263 A1 | 21 December 2016 |
| | | EP 3105263 B1 | 05 April 2023 |
| | | EP 3105264 A1 | 21 December 2016 |
| | | EP 3105264 B1 | 06 September 2023 |
| | | EP 3105265 A1 | 21 December 2016 |
| | | EP 3105265 B1 | 02 June 2021 |
| | | EP 3105266 A1 | 21 December 2016 |
| | | EP 3105266 B1 | 25 March 2020 |

Form PCT/ISA/210 (patent family annex) (July 2022)

**INTERNATIONAL SEARCH REPORT**
**Information on patent family members**

International application No.
**PCT/KR2023/021150**

| Patent document cited in search report | Publication date (day/month/year) | Patent family member(s) | Publication date (day/month/year) |
|---|---|---|---|
| | | EP 3660058 A1 | 03 June 2020 |
| | | EP 3663323 A1 | 10 June 2020 |
| | | EP 3677605 A1 | 08 July 2020 |
| | | EP 3778671 A1 | 17 February 2021 |
| | | EP 3805278 A1 | 14 April 2021 |
| | | EP 3816196 A2 | 05 May 2021 |
| | | EP 3816196 A3 | 14 July 2021 |
| | | EP 3819314 A2 | 12 May 2021 |
| | | EP 3819314 A3 | 21 July 2021 |
| | | EP 3943514 A1 | 26 January 2022 |
| | | EP 3998292 A1 | 18 May 2022 |
| | | EP 3998293 A1 | 18 May 2022 |
| | | EP 4198064 A1 | 21 June 2023 |
| | | ES 2786323 T3 | 09 October 2020 |
| | | ES 2836145 T3 | 24 June 2021 |
| | | ES 2858098 T3 | 29 September 2021 |
| | | ES 2918979 T3 | 21 July 2022 |
| | | ES 2931331 T3 | 28 December 2022 |
| | | ES 2944883 T3 | 26 June 2023 |
| | | JP 2017-505370 A | 16 February 2017 |
| | | JP 2017-505371 A | 16 February 2017 |
| | | JP 2017-505372 A | 16 February 2017 |
| | | JP 2017-505374 A | 16 February 2017 |
| | | JP 2017-505376 A | 16 February 2017 |
| | | JP 2017-505846 A | 23 February 2017 |
| | | JP 2017-506281 A | 02 March 2017 |
| | | JP 2017-507017 A | 16 March 2017 |
| | | JP 2017-508834 A | 30 March 2017 |
| | | JP 2019-143160 A | 29 August 2019 |
| | | JP 2019-163476 A | 26 September 2019 |
| | | JP 2020-055811 A | 09 April 2020 |
| | | JP 2020-090678 A | 11 June 2020 |
| | | JP 2020-143296 A | 10 September 2020 |
| | | JP 2021-036050 A | 04 March 2021 |
| | | JP 2021-073360 A | 13 May 2021 |
| | | JP 2021-073361 A | 13 May 2021 |
| | | JP 2021-073362 A | 13 May 2021 |
| | | JP 2021-102776 A | 15 July 2021 |
| | | JP 6526030 B2 | 05 June 2019 |
| | | JP 6527165 B2 | 05 June 2019 |
| | | JP 6532881 B2 | 19 June 2019 |
| | | JP 6538703 B2 | 03 July 2019 |
| | | JP 6613240 B2 | 27 November 2019 |
| | | JP 6709160 B2 | 10 June 2020 |
| | | JP 6833902 B2 | 24 February 2021 |
| | | JP 6836903 B2 | 03 March 2021 |
| | | JP 6861031 B2 | 21 April 2021 |
| | | JP 6970161 B2 | 24 November 2021 |
| | | JP 6970240 B2 | 24 November 2021 |
| | | JP 7108065 B2 | 27 July 2022 |

Form PCT/ISA/210 (patent family annex) (July 2022)

**INTERNATIONAL SEARCH REPORT**
**Information on patent family members**

International application No.
**PCT/KR2023/021150**

| Patent document cited in search report | Publication date (day/month/year) | Patent family member(s) | Publication date (day/month/year) |
|---|---|---|---|
| | | JP 7208176 B2 | 18 January 2023 |
| | | JP 7212445 B2 | 25 January 2023 |
| | | JP 7222006 B2 | 14 February 2023 |
| | | JP 7229846 B2 | 28 February 2023 |
| | | JP 7277501 B2 | 19 May 2023 |
| | | KR 10-2016-0119801 A | 14 October 2016 |
| | | KR 10-2016-0119817 A | 14 October 2016 |
| | | KR 10-2016-0121541 A | 19 October 2016 |
| | | KR 10-2016-0121542 A | 19 October 2016 |
| | | KR 10-2016-0121543 A | 19 October 2016 |
| | | KR 10-2016-0122178 A | 21 October 2016 |
| | | KR 10-2016-0123320 A | 25 October 2016 |
| | | KR 10-2016-0124788 A | 28 October 2016 |
| | | KR 10-2021-0054044 A | 12 May 2021 |
| | | KR 10-2021-0106026 A | 27 August 2021 |
| | | KR 10-2021-0129251 A | 27 October 2021 |
| | | KR 10-2021-0135629 A | 15 November 2021 |
| | | KR 10-2021-0137229 A | 17 November 2021 |
| | | KR 10-2021-0148433 A | 07 December 2021 |
| | | KR 10-2021-0158429 A | 30 December 2021 |
| | | KR 10-2022-0000908 A | 04 January 2022 |
| | | KR 10-2022-0043228 A | 05 April 2022 |
| | | KR 10-2293490 B1 | 26 August 2021 |
| | | KR 10-2321784 B1 | 05 November 2021 |
| | | KR 10-2323279 B1 | 08 November 2021 |
| | | KR 10-2324441 B1 | 11 November 2021 |
| | | KR 10-2329464 B1 | 23 November 2021 |
| | | KR 10-2329477 B1 | 24 November 2021 |
| | | KR 10-2344094 B1 | 30 December 2021 |
| | | KR 10-2354757 B1 | 08 February 2022 |
| | | KR 10-2362120 B1 | 14 February 2022 |
| | | KR 10-2362123 B1 | 14 February 2022 |
| | | KR 10-2378586 B1 | 25 March 2022 |
| | | KR 10-2394133 B1 | 09 May 2022 |
| | | KR 10-2403962 B1 | 02 June 2022 |
| | | KR 10-2440033 B1 | 06 September 2022 |
| | | KR 10-2454826 B1 | 17 October 2022 |
| | | KR 10-2454827 B1 | 17 October 2022 |
| | | KR 10-2496899 B1 | 07 February 2023 |
| | | KR 10-2514764 B1 | 29 March 2023 |
| | | US 10189923 B2 | 29 January 2019 |
| | | US 10239977 B2 | 26 March 2019 |
| | | US 10253121 B2 | 09 April 2019 |
| | | US 10308742 B2 | 04 June 2019 |
| | | US 10392456 B2 | 27 August 2019 |
| | | US 10421829 B2 | 24 September 2019 |
| | | US 10604606 B2 | 31 March 2020 |
| | | US 11034783 B2 | 15 June 2021 |
| | | US 11142598 B2 | 12 October 2021 |
| | | US 11661466 B2 | 30 May 2023 |

Form PCT/ISA/210 (patent family annex) (July 2022)

**INTERNATIONAL SEARCH REPORT**
**Information on patent family members**

International application No.
**PCT/KR2023/021150**

| Patent document cited in search report | Publication date (day/month/year) | Patent family member(s) | Publication date (day/month/year) |
|---|---|---|---|
| | | US 11708438 B2 | 25 July 2023 |
| | | US 2016-0347874 A1 | 01 December 2016 |
| | | US 2016-0347886 A1 | 01 December 2016 |
| | | US 2016-0347888 A1 | 01 December 2016 |
| | | US 2016-0347889 A1 | 01 December 2016 |
| | | US 2016-0347890 A1 | 01 December 2016 |
| | | US 2016-0362510 A1 | 15 December 2016 |
| | | US 2017-0008983 A1 | 12 January 2017 |
| | | US 2017-0022309 A1 | 26 January 2017 |
| | | US 2017-0183433 A1 | 29 June 2017 |
| | | US 2018-0066088 A1 | 08 March 2018 |
| | | US 2018-0105625 A1 | 19 April 2018 |
| | | US 2018-0186911 A1 | 05 July 2018 |
| | | US 2018-0186912 A1 | 05 July 2018 |
| | | US 2019-0169333 A1 | 06 June 2019 |
| | | US 2019-0177452 A1 | 13 June 2019 |
| | | US 2019-0322780 A1 | 24 October 2019 |
| | | US 2019-0367650 A1 | 05 December 2019 |
| | | US 2021-0024670 A1 | 28 January 2021 |
| | | US 2021-0284770 A1 | 16 September 2021 |
| | | US 2022-0002455 A1 | 06 January 2022 |
| | | US 2023-0174694 A1 | 08 June 2023 |
| | | US 2023-0250204 A1 | 10 August 2023 |
| | | US 9809667 B2 | 07 November 2017 |
| | | US 9850332 B2 | 26 December 2017 |
| | | US 9879106 B2 | 30 January 2018 |
| | | US 9902790 B2 | 27 February 2018 |
| | | US 9932426 B2 | 03 April 2018 |
| | | WO 2015-123164 A1 | 20 August 2015 |
| | | WO 2015-123165 A2 | 20 August 2015 |
| | | WO 2015-123165 A3 | 08 October 2015 |
| | | WO 2015-123166 A1 | 20 August 2015 |
| | | WO 2015-123168 A1 | 20 August 2015 |
| | | WO 2015-123168 A8 | 02 June 2016 |
| | | WO 2015-123169 A1 | 20 August 2015 |
| | | WO 2015-123171 A2 | 20 August 2015 |
| | | WO 2015-123171 A3 | 22 October 2015 |
| | | WO 2015-123171 A8 | 01 September 2016 |
| | | WO 2015-123172 A1 | 20 August 2015 |
| | | WO 2015-123177 A1 | 20 August 2015 |
| | | WO 2015-123179 A1 | 20 August 2015 |
| KR 10-2022-0070734 A | 31 May 2022 | CN 116547318 A | 04 August 2023 |
| | | EP 4249532 A1 | 27 September 2023 |
| | | JP 2023-550493 A | 01 December 2023 |
| | | KR 10-2608612 B1 | 04 December 2023 |
| | | US 2023-0406972 A1 | 21 December 2023 |
| | | WO 2022-108254 A1 | 27 May 2022 |
| US 2005-0159300 A1 | 21 July 2005 | AU 2005-206563 A1 | 04 August 2005 |
| | | AU 2005-206563 B2 | 16 December 2010 |
| | | AU 2010-246340 A1 | 09 December 2010 |

Form PCT/ISA/210 (patent family annex) (July 2022)

**INTERNATIONAL SEARCH REPORT**
**Information on patent family members**

International application No.
**PCT/KR2023/021150**

| Patent document cited in search report | Publication date (day/month/year) | Patent family member(s) | Publication date (day/month/year) |
|---|---|---|---|
| | | AU 2010-246340 B2 | 26 July 2012 |
| | | BR PI0507047 A | 12 June 2007 |
| | | CA 2553993 A1 | 04 August 2005 |
| | | CA 2553993 C | 14 June 2011 |
| | | CA 2736014 A1 | 04 August 2005 |
| | | CA 2736014 C | 27 November 2012 |
| | | CN 100562532 C | 25 November 2009 |
| | | CN 101475654 A | 08 July 2009 |
| | | CN 101475654 B | 02 January 2013 |
| | | CN 1930196 A | 14 March 2007 |
| | | EG 26673 A | 13 May 2014 |
| | | EP 1706437 A1 | 04 October 2006 |
| | | EP 1706437 B1 | 20 January 2016 |
| | | ES 2563165 T3 | 11 March 2016 |
| | | JP 2007-518871 A | 12 July 2007 |
| | | JP 2011-140658 A | 21 July 2011 |
| | | JP 2014-210937 A | 13 November 2014 |
| | | JP 5623315 B2 | 12 November 2014 |
| | | JP 5952870 B2 | 13 July 2016 |
| | | MX PA06008322 A | 26 January 2007 |
| | | RU 2006129936 A | 27 February 2008 |
| | | RU 2382793 C2 | 27 February 2010 |
| | | SG 134326 A1 | 29 August 2007 |
| | | US 2006-0229420 A1 | 12 October 2006 |
| | | US 7119153 B2 | 10 October 2006 |
| | | US 7572875 B2 | 11 August 2009 |
| | | WO 2005-070977 A1 | 04 August 2005 |
| KR 10-0310758 B1 | 17 December 2001 | CN 1077112 C | 02 January 2002 |
| | | CN 1078213 C | 23 January 2002 |
| | | CN 1092206 C | 09 October 2002 |
| | | CN 1134708 A | 30 October 1996 |
| | | CN 1134709 A | 30 October 1996 |
| | | CN 1169123 A | 31 December 1997 |
| | | EP 0675906 A1 | 11 October 1995 |
| | | EP 0675906 B1 | 17 February 1999 |
| | | EP 0675906 B2 | 10 January 2007 |
| | | EP 0675907 A1 | 11 October 1995 |
| | | EP 0675907 B1 | 22 September 1999 |
| | | EP 0690878 A1 | 10 January 1996 |
| | | EP 0690878 B1 | 29 December 1999 |
| | | EP 0690878 B2 | 29 December 2004 |
| | | EP 0728150 A1 | 28 August 1996 |
| | | EP 0728150 B1 | 02 June 1999 |
| | | EP 0728151 A1 | 28 August 1996 |
| | | EP 0728151 B1 | 21 March 2001 |
| | | EP 0789623 A1 | 20 August 1997 |
| | | EP 0789623 B1 | 09 July 2003 |
| | | EP 0859025 A2 | 19 August 1998 |
| | | EP 0859025 A3 | 17 May 2000 |
| | | EP 0859025 B1 | 05 March 2003 |

Form PCT/ISA/210 (patent family annex) (July 2022)

**INTERNATIONAL SEARCH REPORT**
**Information on patent family members**

International application No.
**PCT/KR2023/021150**

| Patent document cited in search report | Publication date (day/month/year) | Patent family member(s) | Publication date (day/month/year) |
|---|---|---|---|
| | | JP 08-505172 A | 04 June 1996 |
| | | JP 08-505174 A | 04 June 1996 |
| | | JP 08-508304 A | 03 September 1996 |
| | | JP 09-504825 A | 13 May 1997 |
| | | JP 09-505336 A | 27 May 1997 |
| | | JP 10-508631 A | 25 August 1998 |
| | | JP 2003-327611 A | 19 November 2003 |
| | | JP 2004-002873 A | 08 January 2004 |
| | | JP 2008-069361 A | 27 March 2008 |
| | | JP 3300357 B2 | 08 July 2002 |
| | | JP 3370674 B2 | 27 January 2003 |
| | | JP 3470972 B2 | 25 November 2003 |
| | | JP 3784380 B2 | 07 June 2006 |
| | | JP 3784381 B2 | 07 June 2006 |
| | | JP 5192210 B2 | 08 May 2013 |
| | | KR 10-0293841 B1 | 24 October 2001 |
| | | KR 10-0298760 B1 | 14 November 2001 |
| | | KR 10-0325897 B1 | 03 July 2002 |
| | | KR 10-0325898 B1 | 29 June 2002 |
| | | KR 10-0411971 B1 | 26 June 2004 |
| | | KR 10-1996-0700277 A | 19 January 1996 |
| | | KR 10-1996-0700296 A | 19 January 1996 |
| | | KR 10-1996-0705852 A | 08 November 1996 |
| | | KR 10-1996-0705853 A | 08 November 1996 |
| | | KR 10-1996-7000277 A | 19 January 1996 |
| | | KR 10-1997-0706900 A | 01 December 1997 |
| | | US 5332706 A | 26 July 1994 |
| | | US 5420220 A | 30 May 1995 |
| | | US 5473028 A | 05 December 1995 |
| | | US 5602067 A | 11 February 1997 |
| | | US 5608019 A | 04 March 1997 |
| | | US 5883203 A | 16 March 1999 |
| | | WO 94-14855 A1 | 07 July 1994 |
| | | WO 94-14856 A1 | 07 July 1994 |
| | | WO 94-21691 A1 | 29 September 1994 |
| | | WO 95-13305 A1 | 18 May 1995 |
| | | WO 95-13306 A1 | 18 May 1995 |
| | | WO 96-14155 A1 | 17 May 1996 |
| | | ZA 948790 B | 07 May 1996 |
| | | ZA 948791 B | 07 August 1996 |
| | | ZA 959333 B | 05 May 1997 |
| KR 10-2013-0113470 A | 15 October 2013 | CN 103261239 A | 21 August 2013 |
| | | CN 103261239 B | 06 April 2016 |
| | | EP 2630168 A2 | 28 August 2013 |
| | | EP 2915826 A1 | 09 September 2015 |
| | | EP 2915826 B1 | 28 February 2024 |
| | | KR 10-1821026 B1 | 22 January 2018 |
| | | KR 10-2015-0083927 A | 20 July 2015 |
| | | RU 2013122565 A | 27 November 2014 |
| | | RU 2592276 C2 | 20 July 2016 |

Form PCT/ISA/210 (patent family annex) (July 2022)

**INTERNATIONAL SEARCH REPORT**
**Information on patent family members**

International application No.
**PCT/KR2023/021150**

| Patent document cited in search report | Publication date (day/month/year) | Patent family member(s) | Publication date (day/month/year) |
|---|---|---|---|
| | | US 2009-0156764 A1 | 18 June 2009 |
| | | US 2009-0297810 A1 | 03 December 2009 |
| | | US 2012-0101235 A1 | 26 April 2012 |
| | | US 2012-0101242 A1 | 26 April 2012 |
| | | US 2012-0200010 A1 | 09 August 2012 |
| | | US 2013-0231451 A1 | 05 September 2013 |
| | | US 2013-0289213 A1 | 31 October 2013 |
| | | US 8431661 B2 | 30 April 2013 |
| | | US 8436114 B2 | 07 May 2013 |
| | | US 8507103 B2 | 13 August 2013 |
| | | US 8829138 B2 | 09 September 2014 |
| | | US 8865849 B2 | 21 October 2014 |
| | | WO 2009-082546 A2 | 02 July 2009 |
| | | WO 2009-082546 A3 | 04 July 2013 |
| | | WO 2012-096698 A2 | 19 July 2012 |
| | | WO 2012-096698 A3 | 20 September 2012 |

Form PCT/ISA/210 (patent family annex) (July 2022)